Europäisches Patentamt

European Patent Office

Office européen des brevets

(11) Veröffentlichungsnummer: **0 328 891**
**A1**

## (12) EUROPÄISCHE PATENTANMELDUNG

(21) Anmeldenummer: 89100839.3

(22) Anmeldetag: 19.01.89

(51) Int. Cl.4: **C21D 9/50 , C21D 7/06 , B23K 35/30 , B23P 6/04**

(30) Priorität: 13.02.88 DE 3804568

(43) Veröffentlichungstag der Anmeldung:
23.08.89 Patentblatt 89/34

(84) Benannte Vertragsstaaten:
AT BE CH DE ES FR GB IT LI LU NL SE

(71) Anmelder: **Union Rheinische Braunkohlen Kraftstoff Aktiengesellschaft**
**Ludwigshafener Strasse o. Nr. Postfach 1663**
**D-5047 Wesseling(DE)**

(72) Erfinder: **Gayk, Wolfgang, Dipl.-Ing.**
**Roentgenstrasse 2**
**D-5047 Wesseling(DE)**

(54) **Verwendung von Schweissmaterialien und Verfahren zur Reparatur von Schweissnähten.**

(57) Gemäß vorliegender Erfindung werden zur Vermeidung von Rißbildung im Schweißnahtbereich, Schweißmaterialien auf Eisenbasis, die bestimmte Mengen an Kohlenstoff, Silizium und Mangan enthalten, zur Reparatur von Schweißnähten an Behältern, wie z. B. Bahn-, Straßen- und Schiffsbehältern verwendet, die insbesondere zum Transport von Ammoniak und anderen Rißbildung induzierenden Medien dienen.

EP 0 328 891 A1

## Verwendung von Schweißmaterialien und Verfahren zur Reparatur von Schweißnähten

Gemäß vorliegender Erfindung werden zur Vermeidung von Rißbildung im Schweißnahtbereich, Schweißmaterialien auf Eisenbasis, die bestimmte Mengen an Kohlenstoff, Silizium und Mangan enthalten, zur Reparatur von Schweißnähten an Behältern, wie z. B. Bahn-, Straßen- und Schiffsbehältern verwendet, die insbesondere zum Transport von Ammoniak und anderen Rißbildung induzierenden Medien dienen.

Es ist bekannt daß an Schweißnähten von Behältern, die bestimmte Medien enthalten, -meist wasserstoffinduzierte- Rißbildung eintritt (s. z. B. "Stress Corrosion Cracking of Steels in Agricultural Ammonia" Report of the Research Committe of the Agricultural Ammonia Institute Nov. 1961).
Solche Medien sind insbesondere Ammoniak, $H_2S$, HCN u.a. oder flüssige oder gasförmige Materialien, die Anteile an $H_2S$, HCN u.a. enthalten. Ein Beispiel ist LPG (liquified petroleum gases) welches $H_2S$ enthalten kann. Die genannten Korrosionsschäden können insbesondere bei Druckgaskesselfahrzeugen ein erhebliches Risiko darstellen.

Die Rißbildung tritt fast ausschließlich im Bereich der Flüssigphase, also an den inneren Schweißnähten der Behälter auf, die von der Flüssigphase bedeckt sind. Man ist bisher davon ausgegangen, daß Schweißnähte immer dann zur Rißbildung in Kontakt mit der Flüssigkeit neigen, wenn keine Spannungsarmglühung erfolgt ist. Inzwischen ist jedoch bekannt, daß auch bei erfolgter Spannungsarmglühung Risse auftreten können.

Die Reparturen der Schweißnähte werden mit eignungsgeprüften Schweißmaterialien durchgeführt, wie z. B. mit dem Schweißzusatz S2 MO-LW 320 nach VdTÜV-Kennblatt Nr. 1725.02 oder beispielsweise mit der Schweißelektrode DMO-Kb (nach VdTÜV-Kenn blatt Nr. 0019.05).

In jüngeren Untersuchungen (Vortrag: W.Gayk, Zusammenkunft der Eigenüberwacher 1987, Münster, 10./11. Nov.) wurde gefunden, daß die Rißbildung an neuen Schweißnähten dadurch verhindert werden kann, daß mit Schweißdraht S2, mit einem Kohlenstoffgehalt von ≤ 0,10 Gew.-%, einem Silziumgehalt von ≤ 0,10 Gew.-% und einem Mangangehalt von ca. 1,00 Gew.-% gearbeitet wird und anschließend ein Spannungsarmglühen zum Abbau der Spannungen, bei 580 °C erfolgt.

Die Untersuchungen der Anmelderin an Behältern für verschiedene, Rißbildung induzierende Medien, insbesondere für $NH_3$ haben jedoch ergeben, daß auch bei Verwendung der dem Fachmann als geeignet bekannten Schweißmaterialien, an Abhängigkeit von Faktoren wie der Art des Spannungsarmglühens, der Art der durch die Schweißung zu verbindenden Grundwerkstoffe, der Art der Aufmischung und durch andere Faktoren in unübersichtlicher Weise Veränderungen in den Kristallstrukturen der Materialien auftreten, welche die Rißbildung begünstigen, wobei auch unter den oben genannten Bedingungen des Standes der Technik Rißbildung eintreten kann.

Aus den Untersuchungen kann man den Schluß ziehen, daß die derzeitigen VdTÜV-Kennblätter für Schweißzusätze und der derzeitige Kenntnisstand nicht befriedigend sind.

Es bestand demgemäß die Aufgabe, gegenüber diesem Stand der Technik einen Weg zu finden, voll zufriedenstellende Reparaturen von Schweißnähten ohne daß spätere Rißbildung auftritt durchführen zu können.

Die Lösung dieser Aufgabe ist der Anmelderin überraschend dadurch gelungen, daß zur Reparatur von Behältern, insbesondere Bahn-, Straßen- und Schiffstransportbehältern für $NH_3$ und andere Rißbildung induzierende Medien,

a, Schweißmaterialien auf Basis Eisen verwendet werden, die >0 bis zu ≤0,08 Gew.-%, bevorzugt bis zu ≤0,07 Gew.-% Kohlenstoff, >0 bis zu ≤0,6 Gew.-%, bevorzugt bis zu ≤ 0,5 Gew.-% Silizium und >0 bis zu ≤0,8 Gew.-%, bevorzugt bis zu ≤0,7 Gew.-% Mangan enthalten,

b, ein prüffähiges Beschleifen der Schweißnaht und Rißprüfung erfolgen,

c, Spannungsarmglühen bei 525 - 550 °C bevorzugt bei 530 -540 °C während einer Haltezeit von 10-90 Minuten, bevorzugt von 15-60 Minuten und besonders bevorzugt während 20-40 Minuten erfolgt und

d, kontrolliertes Kugelstrahlen der beschliffenen Schweißnahtbereiche erfolgt.

Der Stickstoffgehalt im Schweißmaterial sollte ≤ 0,006 Gew.-% sein. Das erfindungsgemäße Schweißgut wird bevorzugt in Form von Stabelektroden eingesetzt. Es kann jedoch auch anderes Schweißgut wie beispielsweise Unterpulver-Schweißgut verwendet werden.

Die Untersuchungen der Anmelderin haben zu dem unvorhersehbaren Ergebnis geführt, daß die Gehalte an Kohlenstoff und Mangan im Schweißmaterial niedriger sein müssen als dies dem Stand der Technik entspricht, nämlich anstelle von einem Kohlenstoffgehalt von ≤0,10 Gew.-% höchstens ≤0,08 und bevorzugt nur ≤ 0,07 Gew.-% und anstelle eines Mangangehalts von ca. 1 Gew.-% nur ≤0,8 bevorzugt ≤0,7 Gew.-%. Der Siliziumgehalt ist anstelle von ≤0,10 Gew.-% jedoch ≤0,6 bevorzugt ≤0,5 Gew.-%.

Der Stickstoffgehalt im Schweißmaterial soll auf ≤0,006 Gew.-% begrenzt sein. Stickstoffeintritt in das Schweißgut muß vermieden werden.

Zur unmittelbaren Rißprüfung der reparierten Schweißnaht wird der Schweißnahtbereich beschliffen und geprüft. Anschließend erfolgt Spannungsarmglühen bei 525 - 550 °C, bevorzugt bei 530 - 540 °C bei einer Haltezeit von 10-90 min., bevorzugt von 15-60 min. und besonders bevorzugt von 20-40 min.

Es hat sich gezeigt, daß durch das Spannungsarmglühen bei 580 °C entsprechend dem Stand der Technik und dem hierbei verwendeten Schweißmaterial noch immer Rißbildung nach Einsatz der reparierten Behälter zum Transport insbesondere von NH₃, erfolgen kann. Dies ergibt sich sowohl aus dem mehrjährigen Einsatz solcher Behälter beispielsweise für den NH₃-Transport als auch aus dem weiter unten beschriebenen NACE-Test.

Die Untersuchungen der Anmelderin haben überraschend ergeben, daß das nach dem geschilderten Stand der Technik reparierte und bei 580 °C spannungsarmgeglühte Material eine Streckgrenze von 600 N/mm² besitzt, während bei Verwendung des erfindungsgemäßen Schweißguts und dem Spannungsarmglühen bei ca. 530 -540 °C eine Streckgrenze von ca. 520 N/mm² erzielt wird.

Hier besteht offenbar ein unmittelbarer wenn auch ursächlich nicht verstandener Zusammenhang zwischen Streckgrenze und Neigung des Schweißbereichs zur Rißbildung.

Bei der überraschend niedrigen Streckgrenze, die erfindungsgemäß erzielt wird, unterbleibt die Rißbildung.

Nach dem Spannungsarmglühen ist erfindungsgemäß ein kontrolliertes Kugelstrahlen des beschliffenen Schweißnahtbereichs zum Abbau der durch das Schleifen aufgetretenen Zugspannung erforderlich.

Erfindungsgemäß lassen sich mit sehr guten Ergebnissen Behälter aus Feinkornbaustählen nach DIN 17 102 schweißen.

Solche Feinkornbaustähle sind beispielsweise unter den Bezeichnungen St 380, St E 460 oder St E 470 bekannt. Sie sollen garantierte Mindest-Streckgrenzen von 380 N/mm², bevorzugt bis zu 470 N/mm² besitzen. Die Empfindlichkeit des Schweißgutes auf Risse wurde nach dem sog. NACE-Standard TM-01-77 geprüft. Hierbei werden Proben in sog. NACE-Lösung eingesetzt. Nach 8 Stunden werden die Proben der Lösung entnommen, gesäubert und im Stereomikroskop auf Anrisse geprüft.

Zusätzliche Prüfungen können gemäß Zugversuch DIN 50 145 erfolgen oder durch Bestimmung der Härte nach DIN 50 163 Teil 1.

Als Schweißverfahren können beispielsweise das WIG-Verfahren (Wolfram-Inert-Gas), das E-Hand-Verfahren (Elektroden-Hand-) oder das UP-Verfahren (Unterpulver) eingesetzt werden.

Bei der erfindungsgemäßen Verwendung können beispielsweise Stabelektroden nach den Normbezeichnungen DIN 1913 (Bundesrepublik Deutschland)
ISO 2560 Internationale Norm
AWS: ASME II/c SFA 5.1 U.S.-Norm
eingesetzt werden.

Es handelt sich im allgemeinen um Stäbe mit 2 - 7 mm, bevorzugt 3,25 - 5 mm Durchmesser, einer Stablänge von 200 - 600 mm, bevorzugt von 250 - 500 mm, wobei bei einer Stromstärke von 50 -350 Ampere gearbeitet wird. Jedoch auch andere Stäbe können erfindungsgemäß eingesetzt werden.

Typische Stabelektroden haben Mindest-Streckgrenzen von beispielsweise 300 - 400 Newton/mm², Zugfestigkeiten von 400 -700 N/mm², Mindest-Dehnungen von 20 - 35 % und Kerbschlagarbeiten von 60 - 180 Joule. Die genannten Stabelektroden bzw. Schweißmaterialien sind jedoch nicht als limitierend anzusehen.

Beispiel

Reparatur eines geschweißten Probebleches

Die Schweißnaht eines geschweißten Probebleches aus Feinkornbaustahl St E 460 wurde mit einer Stabelektrode aus Eisen repariert, die 0.07 Gew.-% Kohlenstoff, 0,4 Gew.-% Silizium und 0,7 Gew.-% Mangan enthielt.

Anschließend wurde der Schweißbereich prüffähig beschliffen und auf Risse geprüft.

Es wurden keine Risse festgestellt.

Spannungsarmglühen erfolgte bei 535 °C während einer Haltezeit von 30 min. Anschließend wurde die Streckgrenze gemessen (Spannung bei der die reversible Streckung einer stabförmigen Materialprobe in eine irreversible Streckung übergeht.)

Hierzu wurde aus der Schweißnaht in Längsrichtung derselben eine stabförmige Probe entnommen. Es wurde überraschend gefunden, daß die Streckgrenze bei 518 N/mm² lag.

Anschließend wurde eine Probe dem NACE-Test unterworfen.

Es wurde keinerlei Rißbildung festgestellt. Zugversuch und Härte waren voll zufriedenstellend.

Vergleichsbeispiel

Als Schweißgut wurde eine Stabelektrode nach DIN 8575/EMoR22 verwendet. Das Spannungsarmglühen erfolgte bei 580 °C. Der NACE-Test ergab Risse quer zur Schweißnaht. Die Streckgrenze lag bei 610 N/mm².

Dem Fachmann ist bekannt, daß die Ergebnisse des NACE-Tests zur Beurteilung der Neigung von reparierten Schweißnähten an Behältern, insbesondere Transportbehältern zur Rißbildung herangezogen werden können, wenn in solchen Behältern Rißbildung induzierende Medien wie insbesondere $NH_3$ über einen längeren Zeitraum z. B. 2 - 3 Jahren transportiert worden sind.

Die obigen Versuche zeigen daher, daß durch Anwendung des erfindungsgemäß Verfahrens im Unterschied zum Stand der Technik, Rißbildung an den reparierten Schweißnähten solcher Behälter vermieden werden kann.

## Ansprüche

1. Verfahren zur Reparatur von Schweißnähten an Behältern insbesondere an Bahn-, Straßen- und Schiffs-Transportbehältern, dadurch gekennzeichnet, daß

a, Schweißmaterial auf Basis Eisen verwendet wird, das >0 bis zu ≤0,08 Gew.-% Kohlenstoff, >0 bis zu ≤0,6 Gew.-% Silizium und >0 bis zu ≤0,8 Gew.-% Mangan enthält,

b, ein prüffähiges Beschleifen der Schweißnaht und Rißprüfung erfolgen,

c, Spannungsarmglühen bei 525 - 550 °C bevorzugt bei 530 -540 °C während einer Haltezeit von 10 - 90 Minuten, bevorzugt von 15-60 Minuten und besonders bevorzugt während 20 - 40 Minuten erfolgt und

d, kontrolliertes Kugelstrahlen des beschliffenen Schweißnahtbereichs erfolgt

2. Verfahren nach Anspruch 1, dadurch gekennzeichnet, daß das Schweißmaterial >0 bis zu ≤0.07 Gew.-% Kohlenstoff, >0 bis zu ≤0,5 Gew.-% Silizium und >0 bis zu ≤0,7 Gew.-% Mangan enthält.

3. Verfahren nach den Ansprüchen 1 und 2, dadurch gekennzeichnet, daß das Schweißmaterial in Form von Stabelektroden eingesetzt wird.

4. Verfahren nach den Ansprüchen 1 - 3, dadurch gekennzeichnet, daß dieses zur Reparatur der Innenschweißung der Behälter verwendet wird.

5. Verfahren nach den Ansprüchen 1 - 4, dadurch gekennzeichnet, daß dieses zur Reparatur von Schweißnähten an Feinkornbaustählen nach DIN 17 102 verwendet wird.

6. Verfahren nach den Ansprüchen 1 - 5, dadurch gekennzeichnet, daß es zur Reparatur von Behältern für Rißbildung induzierende Medien verwendet wird.

7. Verfahren nach den Ansprüchen 1 - 6, dadurch gekennzeichnet, daß es zur Reparatur von $NH_3$-Behältern oder Behältern für $H_2S$, HCN oder flüssige oder gasförmige Materialien, die Anteile an $H_2S$ und/oder HCN enthalten, verwendet wird.

8. Verfahren nach den Ansprüchen 1 - 7, zur Reparatur von Schweißnähten von $NH_3$-Druckbehältern.

9. Verwendung von Schweißgut und Behandlungsmethoden nach den Ansprüchen 1 - 8, zur Reparatur von Behältern für Rißbildung induzierende Medien, insbesondere $NH_3$, $H_2S$, HCN oder flüssige oder gasförmige Materialien, die Anteile an $H_2S$ und/oder HCN enthalten.

10. Verwendung von Schweißgut und Behandlungsmethoden nach den Ansprüchen 1 - 8 zur Reparatur von Schweißnähten von Behältern, insbesondere Bahn-, Straßen- und Schiffs-Transportbehältern.

11. Verwendung von Schweißgut und Behandlungsmethoden nach den Ansprüchen 1 - 8 zur Reparatur von Innenschweißnähten von Transportbehältern, insbesondere von Bahn-, Straßen-und Schiffs-Transportbehältern.

12. Verwendung von Schweißgut und Behandlungsmethoden nach den Ansprüchen 1 - 8 zur Reparatur von $NH_3$-Druckbehältern, insbesondere $NH_3$-Transportbehältern.

13. Verfahren nach den Ansprüchen 1 - 8, dadurch gekennzeichnet, daß die Untergrenze des Kohlenstoffgehalts im Schweißmaterial ≥0,005 Gew.-%, des Siliziumgehalts ≥0,01 Gew.-% und des Mangangehalts ≥0,01 Gew.-% ist.

Europäisches
Patentamt

**EUROPÄISCHER RECHERCHENBERICHT**

Nummer der Anmeldung

EP 89 10 0839

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 6, Nr. 242 (M-175)[1120], 30. November 1982; & JP-A-57 139 493 (KAWASAKI SEITETSU K.K.) 28-08-1982 --- | 1,2,4,5 ,7,8-13 | C 21 D 9/50<br>C 21 D 7/06<br>B 23 K 35/30<br>B 23 P 6/04 |
| A | SCHWEISSEN UND SCHNEIDEN, Heft 7, Jahrgang 17, July 1965, Seiten 313-315; "Eine nicht alltägliche Reparatur aus dem Dampfkesselbau" --- | 1,3,4 | |
| A | DE-A-1 940 969 (LEMMERZ-WERKE)<br>* Ansprüche 3,4 *<br>--- | 1 | |
| A | DE-A-1 433 719 (CONTINENTAL OIL)<br>--- | | |
| A | WELDING PRODUCTION, Band 25, Nr. 1, Januar 1978, Seiten 47-48; S.N. AGRONOMOV et al.: "The surface hardening of the weld zone with a pneumatic tool" --- | | |
| A | WELDING JOUNAL, Band 65, Nr. 12, Dezember 1986, Seiten 326-S - 334-S, Miami, FL, US; G.M. EVANS: "The effect of stress relieving on the microstructure and properties of C-Mn all-weld metal deposits" --- | | RECHERCHIERTE SACHGEBIETE (Int. Cl.4)<br><br>C 21 D<br>B 23 K<br>B 23 P |
| A | E. HOUDREMONT: "Handbuch der Sonderstahlkunde", Band 1, 1956, Seiten 238-240, Springer Verlag ----- | | |

Der vorliegende Recherchenbericht wurde für alle Patentansprüche erstellt

| Recherchenort | Abschlußdatum der Recherche | Prüfer |
|---|---|---|
| DEN HAAG | 24-05-1989 | MOLLET G.H.J. |